# EUROPEAN PATENT SPECIFICATION

(11) **EP 4 154 395 B1**
(45) Date of publication and mention of the grant of the patent: **21.10.2026**
(21) Application number: 21808944.9
(22) Date of filing: 21.05.2021
(51) Int. Cl.: H02P 27/08, H02P 6/18, H02P 6/16

(54) **A METHOD FOR CONTROLLING A ROTARY ELECTRIC MACHINE AND A SYSTEM THEREOF**
VERFAHREN ZUR STEUERUNG EINER ELEKTRISCHEN DREHMASCHINE UND SYSTEM DAFÜR
PROCÉDÉ DE COMMANDE D'UNE MACHINE ÉLECTRIQUE ROTATIVE ET SYSTÈME ASSOCIÉ

(30) Priority: 21.05.2020 IN 202021021442
(43) Date of publication of application: 29.03.2023
(73) Proprietor: Sedemac Mechatronics PVT Ltd, Maharashtra PIN 400069 (IN)
(72) Inventor: JOSHI, Anaykumar, Maharashtra, Nagpur 440010 (IN); DIXIT, Amit, Maharashtra, Pune 411052 (IN)
(74) Representative: Barker Brettell LLP
(86) International application number: PCT/IN2021/050494
(87) International publication number: WO 2021/234738

(56) References cited:
- WO-A1-2018/130793
- CN-A- 110 880 897
- US-A1- 2013 057 193
- US-A1- 2013 057 193
- US-A1- 2017 129 340

## Description

### FIELD OF THE INVENTION

The present invention relates to controlling of rotary electric machines.

### BACKGROUND OF THE INVENTION

Conventional electric motoring systems typically comprise a motor controller coupled to an electric motor, the electric motor comprising a rotor and a stator, the stator further comprising N phases with each phase comprising a winding made of set of coils connected in a series-parallel configuration. The motor controller enables optimal torque production and efficient performance of the electric motoring system by applying optimal commutation to the stator phase windings. For the purpose of maximizing the system performance and operating the system at its maximum efficiency, motor controllers require information of the relative position of rotor with respect with the stator. Accordingly, electric motors are typically coupled with a position sensor, such as a set of hall effect sensors or optical encoders. The position sensor is typically coupled with the motor controller using a wiring harness.

Position sensors such as those mentioned above add to cost of the system. Furthermore, the position sensors and the related wiring harness are prone to failure because of exposure to high temperature, vibrations and proximity to mechanical objects (typically part of rotor) moving at high speeds. Furthermore, the placement of position sensors in the mechanical package of the electric motor occupies space, hence resulting sub-optimal mechanical packaging of the electric motor.

Attempts have been made to reduce system cost and improve system robustness, by controlling electric motors without using position sensors. An existing sensor-less control method involves sensing, or estimating, back-emf voltage induced in the stator windings because of relative motion between rotor and stator. However, this method is effective only when the rotor is rotating at a relatively high speed. Another method of sensor-less control of electric motor involves injecting high frequency voltage in the stator windings to determine position of rotor by leveraging rotor saliency. However, this method results in sub-optimal machine efficiency because of unwanted harmonics in stator winding current, further resulting in unnecessary vibration and noise in the machine.

Thus, there is a need in the art for a method and system for controlling a rotary electric machine thereof which addresses at least the aforementioned problems.

CN 110 880 897 A discloses a motor control method and device and a driving device, which are suitable for sensor-less starting control of a permanent magnet synchronous motor. The method comprises the following steps: detecting a rotor initial position of the permanent magnet synchronous motor before starting; when the permanent magnet synchronous motor is started, injecting a high-frequency voltage vector into the permanent magnet synchronous motor; and calculating the real-time position of the rotor of the permanent magnet synchronous motor according to the current response of the high-frequency voltage vector and the initial position of the rotor. The initial position of the rotor is determined through a high-frequency voltage injection method when the rotor is static and low-speed, the position of the rotor is detected through a flux linkage observation method when the rotor is high-speed, and the position of the rotor is calculated through a switching function in the low-speed and high-speed switching process. According to this disclosure, the sensor-less closed-loop starting of the motor is realized, the impact current during starting is reduced, the switching process of the two control modes is controlled through the switching function, and the problems of jittering and out-of-step in the switching process are reduced.

### SUMMARY OF THE INVENTION

In one aspect of the invention, the present invention is directed at a method for controlling a rotary electric machine as claimed in Claim 1. The method has the step of determining a state of the rotary electric machine based on speed of a rotor of the rotary electric machine. The state comprises a high-speed state when the rotor speed is more than a predetermined threshold speed and a low-speed state when speed of the rotor is less than the predetermined threshold speed. If the rotary electric machine is in the low-speed state, an intra-PWM current ripple and a mean current vector is calculated by measuring current in stator phase windings of the rotary electric machine within a Pulse Width Modulation Cycle. An inductance vector is computed based on the intra-PWM current ripple. A first rotor position (P1) and a first rotor speed (S1) are estimated based on the inductance vector and the mean current vector. If the rotary electric machine is in the high speed state, current in stator phase windings of the rotary electric machine is measured within a Pulse Width Modulation Cycle. Average current is determined for each stator phase winding of the rotary electric machine within the Pulse Width Modulation cycle. A second rotor position (P2) and second rotor speed (S2) is estimated based on the average currents in stator phase windings within the Pulse Width Modulation cycle. The state of the rotary electric machine is selected between the high-speed state and the low-speed state based on the estimated first rotor speed (S1) and/or the estimated second rotor speed (S2). If the low-speed state is selected, Pulse Width Modulation signals are updated based on the estimated first rotor position (P1). If the high-speed state is selected, Pulse Width Modulation signals are updated based on the estimated second rotor position (P2).

In an embodiment of the invention, the state of the rotary electric machine is initialised as the low-speed state, an initial position (Pi) of the rotor of the rotary electric machine is determined with respect to a stator of the rotary electric machine by applying a set of commutations to stator phase windings and determining value of DC side current corresponding to each commutation, and initiating rotor position based on commutation resulting in maximum current. Pulse Width Modulation signals are applied to stator phase windings based on the initial position (Pi) of the rotor; after which, the state of the rotary electric machine is determined as the low-speed state.

If the rotary electric machine is determined to be in the low-speed state, a mean current vector and an intra-PWM current ripple are calculated as described in Claim 1. In an embodiment, whether current sampling for stator phase windings corresponding to all N phases was performed is checked. In an embodiment, multiple current samples for the Nth phase within the Pulse Width Modulation cycle are reconstructed, if the current sampling for stator phase windings corresponding to all N phases was not performed.

If the rotary electric machine is determined to be in the high-speed state, current in stator phase windings is measured as claimed in Claim 1.. In an embodiment, whether current sampling for stator phase windings corresponding to all N phases was performed is checked. In an embodiment, multiple current samples for the Nth phase within the Pulse Width Modulation cycle are reconstructed, if the current sampling for stator phase windings corresponding to all N phases was not performed.

In a further embodiment of the invention, average current flowing in the stator phase windings is estimated based on an assumed rotor position, DC bus voltage and on the PWM signals applied to the machine, and the estimated average current to the determined average current are compared. In an embodiment, estimation of the second rotor position (P2) and the second rotor speed (S2) is corrected by an error metric based on difference between estimated average current and the determined average current.

In another aspect, the present invention is directed at a system for controlling a rotary electric machine, as claimed in Claim 6. The system has a pulse width modulator for applying Pulse Width Modulation signals to stator phase windings of the rotary electric machine; a plurality of semi-conductor power switches for receiving Pulse Width Modulation signals and converting the signals into AC voltage for stator phase windings of the rotary electric machine; a plurality of current sensing devices for sensing the current in the stator phase windings corresponding to phases of the rotary electric machine; and a control unit. The control unit is configured for determining a state of the rotary electric machine based on speed of a rotor of the rotary electric machine between a high-speed state when the rotor speed is more than a predetermined threshold speed and a low-speed state when speed of the rotor is less than the predetermined threshold speed. If the rotary electric machine is in the low-speed state, the control unit is configured for calculating an intra-PWM current ripple and a mean current vector by measuring current in stator phase windings of the rotary electric machine within a Pulse Width Modulation Cycle, computing an inductance vector based on the intra-PWM current ripple, estimating a first rotor position (P1) and a first rotor speed (S1) based on the inductance vector and the mean current vector. If the rotary electric machine is in the high speed state, the control unit is configured for measuring current in stator phase windings of the rotary electric machine within a Pulse Width Modulation Cycle. The control unit is further configured for determining average current for each stator phase winding of the rotary electric machine within the Pulse Width Modulation cycle, estimating a second rotor position (P2) and second rotor speed (S2) based on average current in stator phase windings within the Pulse Width Modulation cycle, selecting the state of the rotary electric machine between the high-speed state and the low-speed state based on the estimated first rotor speed (S1) and/or the estimated second rotor speed (S2). If the low-speed state is selected, the control unit is configured for updating Pulse Width Modulation signals based on the estimated first rotor position (P1), and if the high-speed state is selected, the control unit is configured for updating Pulse Width Modulation signals based on the estimated second rotor position (P2).

In an embodiment of the invention, the control unit is further configured for initializing the state of the rotary electric machine as the low-speed state, determining an initial position (Pi) of the rotor of the rotary electric machine with respect to a stator of the rotary electric machine by applying a set of commutations to stator phase windings and determining value of DC side current corresponding to each commutation and initiating rotor position based on commutation resulting in maximum current, applying Pulse Width Modulation signals to stator phase windings based on the initial position (Pi) of the rotor; after which, the state of the rotary electric machine is set as the low- speed state.

In a further embodiment of the invention, the plurality of power switches comprises a three-phase H-bridge having six semi-conductor power switches arranged in three H-bridge arms, such that each arm has a high power semiconductor switch and a low power semiconductor switch. In an embodiment, the system is configured to use space-vector-modulation technique for generating pulse-width-modulated signals based on center-aligned PWM.

In a further embodiment of the invention, the system has a current monitor is configured to: during the high speed state, measure one current sample per phase per Pulse Width Modulation cycle, the current sampling performed substantially in the center of zero-sequence commutation; and during low speed state, measure two current samples per phase per Pulse Width Modulation cycle, the current sampling performed substantially equally apart from the center of the zero-sequence commutation.

In a further embodiment of the invention, the system has at least two current sensing devices wherein each current sensing device measures current flowing through the low power semiconductor switch of each H-Bridge arm. In an alternative embodiment, the system has at least two current sensing devices wherein each current sensing device is connected in series with stator phase windings.

In another embodiment of the invention, the current monitor has analog measurement bandwidth substantially more than 10 times the frequency of PWM signal applied to the stator phase windings.

In a further embodiment of the invention, the system is configured to vary frequency of the pulse width modulator depending on variables comprising the estimated first rotor speed (S1) and the estimated second rotor speed (S2).

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a flowchart for a method of controlling a rotary electric machine in accordance with an embodiment of the invention.
Figure 2 illustrates an exemplary variation of speed of the rotor of the rotary electric machine under operation with time, in accordance with an embodiment of the invention.
Figure 3 illustrates an intra-PWM current ripple based on three current variation quantities, in accordance with an embodiment of the invention.
Figure 4 illustrates intra-PWM current ripple based on a reconstruction of DC bus-side current variation constructed using individual current variation in each stator winding phase, in accordance with an embodiment of the invention.
Figure 5 illustrates a flowchart of a trained estimation model for estimating rotor position and rotor speed in accordance with an embodiment of the invention.
Figure 6 illustrates a system for controlling the rotary electric machine in accordance with an embodiment of the invention.
Figure 7 illustrates a system for controlling the rotary electric machine in accordance with an embodiment of the invention.
Figure 8 illustrates PWM signal generation using space vector modulation technique based on center-aligned PWM, and a current sampling scheme in zero-sequence commutation, in accordance with an embodiment of the invention.

### DETAILED DESCRIPTION OF THE INVENTION

The present invention relates to a method and system for controlling a rotary electric machine. More particularly, the present invention relates to a method and system for sensor-less control of a rotary electric machine.

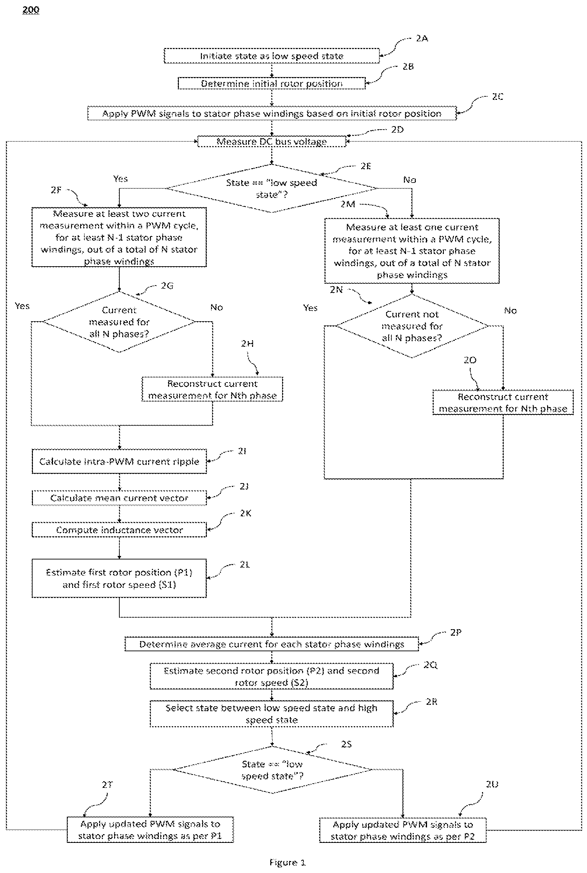

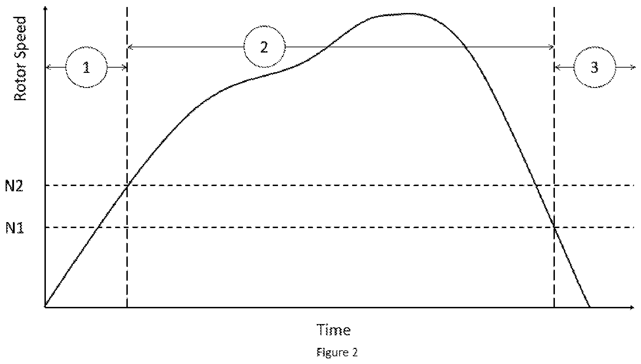

Figure 1 illustrates a flowchart for method steps involved in a method 200 for controlling a rotary electric machine in accordance with an embodiment of the invention. For control of the rotary electric machine, a state of the rotary electric machine is defined. In the present invention, the state of the rotary machine is defined as a low speed state when speed of a rotor of the rotary electric machine is less than a predetermined threshold speed and a high speed state when speed of the rotor is greater than the predetermined threshold speed. Reference is made to Figure 2 which depicts variation of speed of the rotor of the rotary electric machine under operation with time, wherein, speed of the rotor is defined in three zones. As illustrated in Figure 2, as the rotary electric machine is started from a standstill position, the state of the rotary electric machine is defined as the low speed state till the rotor speed remains less than a first predetermined threshold speed (N2). Thereafter, as the rotor speed exceeds the first predetermined threshold (N2), the state of the rotary electric machine is defined as the high speed state, for as long as the rotor speed remains greater than a second predetermined threshold speed (N1). As the rotor speed drops below the second predetermined threshold speed (N1), the state of the rotary electric machine is again defined as the low speed state.

As illustrated in Figure 1, at step 2A, a control unit initialises the state of the rotary electric machine as the low-speed state as control of the rotary electric machine is begun from the standstill position. At step 2B, the control unit determines an initial position (Pᵢ) of the rotor of the rotary electric machine with respect to a stator of the rotary electric machine. This is done by applying a set of commutations to stator phase windings and determining value of DC side current corresponding to each commutation, and initiating rotor position based on commutation resulting in maximum current. At step 2C, Pulse Width Modulation signals are applied to stator phase windings based on the initial position (Pᵢ) of the rotor, thereby initializing the control of the rotary electric machine. The method 200 further comprises step 2D, of measuring DC bus voltage.

At step 2E, the state of the rotary electric machine is determined based on speed of a rotor of the rotary electric machine between a high speed state and a low speed state as explained hereinbefore. When the control of the rotary electric machine is initialized as in steps 2A-2D, the state of the rotary electric machine is determined as the low speed state at first instance. Thereafter, the state of the rotary electric machine is defined based on speed of the rotor. Separate method steps are involved in control of the rotary electric machine when the state of the rotary electric machine is determined as the low speed state from the method steps involved in control of the rotary electric machine when the state of the rotary electric machine is determined as the high speed state.

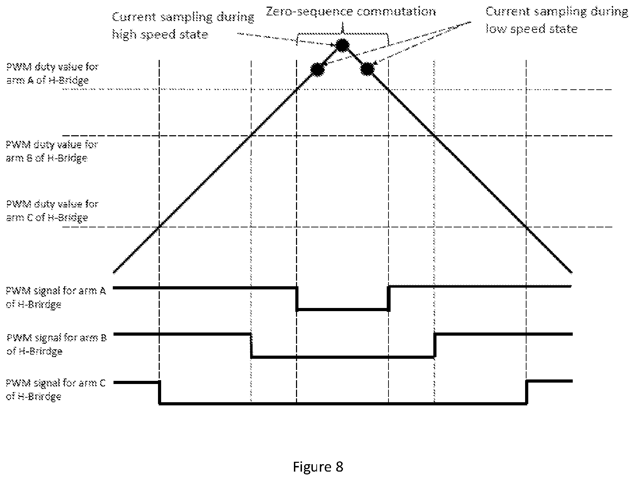

If the state of the rotary is determined to be in the low speed state, the method 200 moves to step 2F, otherwise the method 200 moves to step 2M. At step 2F, current in stator phase windings for all phases of the rotary electric machine is measured. This is done by measuring at least two samples of at least N-1 stator phase windings, out of a total of N stator phase windings. At step 2G, whether current sampling for stator phase windings corresponding to all N phases was performed is checked. If the current sampling for stator phase windings corresponding to all N phases was performed, the method 200 moves to step 2I, otherwise the method 200 moves to step 2H, wherein since the current sampling for stator phase windings corresponding to all N phases was not performed, multiple current samples for the Nth phase within the Pulse Width Modulation cycle are reconstructed. This reconstruction is achieved by leveraging the fact that summation of currents flowing through all phase windings, at a single time instant, is zero. Reference is made to Figure 8 which illustrates an exemplary current sampling scheme for reconstruction of current for the Nth phase as mentioned hereinbefore. In that, the current sampling scheme illustrated in Figure 8 relates to a three-phase electric motor wherein measurements for two current samples per phase per PWM cycle are conducted within the zero commutation as part of space vector modulation, such that the two current samples for each phase are roughly equidistant from the center of the zero commutation. This completes the current sampling for stator phase windings corresponding to all N phases of the rotary electric machine.

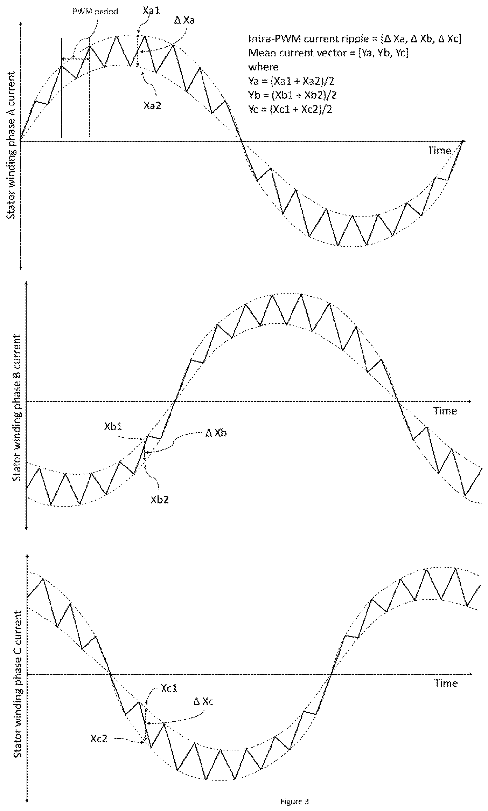

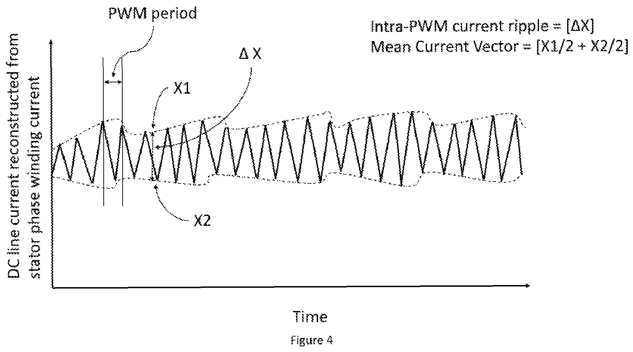

At step 2I as mentioned above, an intra-PWM current ripple (ΔX) is calculated by measuring current in stator phase windings of the rotary electric machine within a Pulse Width Modulation Cycle. The intra-PWM current ripple (ΔX) is defined as change or variation in current in the stator phase winding within a Pulse Width Modulation Cycle. Such change or variation in current with the PWM cycle relates to inductance of stator winding which is an indicator of position of the rotor in the rotary electric machine. Figure 3 illustrates the change or variation in current with respect to all three-phases of the exemplary rotary electric machine. As can be seen in Figure 3, the intra-PWM current ripple (ΔX) is made up of three individual current variation quantities (ΔXₐ, ΔX_{b}, ΔX_{c}) corresponding to three phases of the rotary electric machine. Figure 3 depicts calculation of the intra-PWM current ripple (ΔX) by reconstructing DC side current using current samples of individual stator phase windings and determining a current variation quantity for the reconstructed DC side current. Figure 4 illustrates another embodiment of the present invention, wherein the intra-PWM current ripple (ΔX) is made up of a single current variation quantity.

Further, at step 2J, a mean current vector (Y) is calculated by measuring current in stator phase windings of the rotary electric machine within a Pulse Width Modulation Cycle. The mean current vector (Y) is indicative of the magnitude of current in stator phase windings. In the embodiment depicted in Figure 3, the mean current vector (Y) is composed of average current within PWM cycle for the three phases (Yₐ, Y_{b}, Y_{c}). In the embodiment depicted in Figure 4, the mean current vector (y) is composed of the average current within PWM cycle for the reconstructed DC side current waveform.

At step 2K, an inductance vector is computed based on the intra-PWM current ripple (ΔX). For a stator phase winding with low ratio of inductance and resistance, the values contained in the intra-PWM current ripple (ΔX) are typically large. Similarly, for a stator phase winding with a high ratio of inductance and resistance, the values contained in the intra-PWM current ripple (ΔX) are typically small. The inductance vector is indicative of position of the rotor of the rotary electric machine. This is because inductance of stator phase windings varies with varying position of the rotor owing to either saliency effect in salient machines or magnetic saturation in non-salient machines or a combination thereof. In conclusion, rotor position can be inferred from the inductance vector.

At step 2L, a first rotor position (P1) and a first rotor speed (S1) are estimated based on the inductance vector and the mean current vector (Y). The rotor position and rotor speed are inferred based on the inductance vector and the mean current vector (Y) is used to compensate the effect of the magnetic saturation caused by current flowing in stator phase windings. The method 200 then moves on to step 2P.

As mentioned hereinbefore, if the state of the rotary electric machine is not determined as the low speed state, that is, the state of the rotary electric machine is determined as the high-speed state, the method 200 moves to step 2M from step 2E. At step 2M, current in stator phase windings of the rotary electric machine is measured within the Pulse Width Modulation Cycle. This is done by measuring of the current in stator phase windings for all phases of the rotary electric machine by measuring at least one sample of at least N-1 stator phase windings, out of a total of N stator phase windings. At step 2N, whether current sampling for stator phase windings corresponding to all N phases was performed is checked. If the current sampling for stator phase windings corresponding to all N phases was performed, the method 200 moves to step 2P, otherwise the method 200 moves to step 2O, wherein since the current sampling for stator phase windings corresponding to all N phases was not performed, multiple current samples for the Nth phase within the Pulse Width Modulation cycle are reconstructed in accordance with the same principle as explained above that summation of currents flowing through all phase windings, at a single time instant, is zero. The method 200 then moves to step 2P.

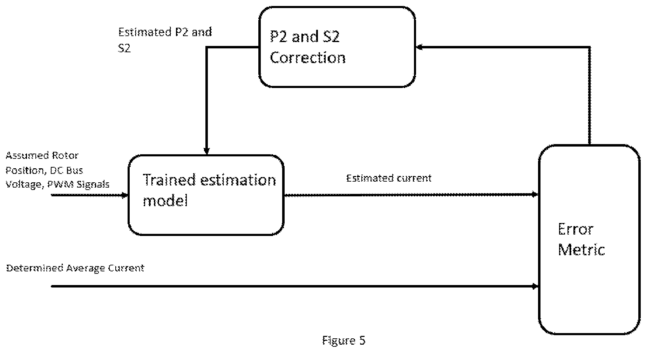

At step 2P, average current for each stator phase winding of the rotary electric machine is determined within the Pulse Width Modulation cycle. At step 2Q, a second rotor position (P2) and second rotor speed (S2) is estimated based on the average currents in stator phase windings within the Pulse Width Modulation cycle. In an embodiment of the invention as depicted in the flowchart of Figure 5, the estimation of the second rotor position (P2) and the second rotor speed (S2) is done by means of a trained estimation model of the rotary electric machine comprising knowledge of inductance and resistance of the stator winding. The dynamic estimation model is used to estimate the current flowing in stator phase windings based on an assumed rotor position, DC bus voltage as measured in step 2D and on the PWM signals applied to the machine. The estimated current so measured is then compared to the determined average current at step 2P. The difference between the estimated current and the determined average current is termed as error metric and the error metric is used to further correct the estimate of the second rotor position and the second rotor speed such that the value of the error metric is kept close to zero.

At step 2R, the state of the rotary electric machine is selected between the high-speed state and the low-speed state based on the estimated first rotor speed (S1) and/or the estimated second rotor speed (S2) in accordance with the embodiment described in Figure 2. In an embodiment the state of the rotary electric machine is based on a combination of the estimated first rotor speed (S1) and the estimated second rotor speed (S2). In an embodiment of the invention, the state of the rotary machine so selected at step 2R is fed as the determined state of the rotary electric machine at step 2E, that is the state of the rotary electric machine selected at step 2R acts as the determined state of the rotary electric machine at step 2E.

At step 2S, the control unit checks the state selected at step 2R. If the state of the rotary electric machine is selected at low speed state, the method 200 moves to step 2T wherein Pulse Width Modulation signals applied to stator phase windings are updated based on the estimated first rotor position (P1). Conversely, if the state of the rotary electric machine is selected at the high speed state, the method 200 moves to step 2U wherein Pulse Width Modulation signals applies to stator phase windings are updated based on the estimated second rotor position (P2).

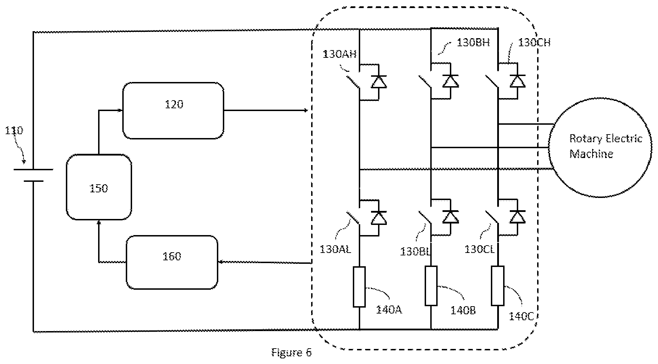

In another aspect, the present invention relates to a system 100 for controlling the rotary electric machine. Figure 6 illustrates the system 100 for controlling the rotary electric machine, in accordance with an embodiment of the invention. In an embodiment, the system 100 is coupled to a direct voltage current source 110 such as a battery which powers the system 100 and the rotary electric machine. As illustrated in Figure 6, the system 100 comprises a pulse width modulator 120 for applying Pulse Width Modulation signals to stator phase windings of the rotary electric machine, a plurality of semi-conductor power switches 130 for receiving Pulse Width Modulation signals and converting the signals into AC voltage for stator phase windings of the rotary electric machine, a plurality of current sensing devices 140 for sensing the current in the stator phase windings corresponding to phases of the rotary electric machine and a control unit 150 configured for performing the method steps 2A-2U as described hereinbefore.

In an embodiment of the invention, the plurality of semi-conductor power switches 130 comprises a three-phase H-bridge having six semi-conductor power switches 130AH, 130BH, 130CH, 130AL, 130BL, 130CL arranged in three H-bridge arms, such that each arm has a high power semiconductor switch and a low power semiconductor switch. Resultantly the three-phase H-bridge has a total of three high power semiconductor switches 130AH, 130BH, 130CH and three low power semiconductor switches 130AL, 130BL, 130CL. In an embodiment the plurality of power switches 130 comprises metal-oxide-semiconductor field-effect transistors (MOSFETs) of insulated-gate bipolar transistors (IGBTs). In an embodiment of the invention, the system 100 is configured to use space-vector-modulation technique for generating pulse-width-modulated signals based on center-aligned Pulse Width Modulation as illustrated in Figure 8.

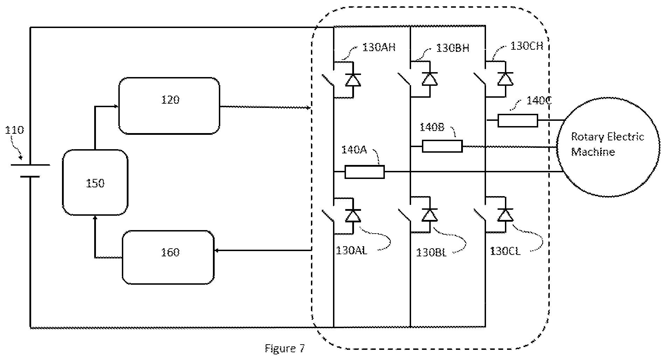

In a further embodiment of the invention, the plurality of current sensing devices 140 comprises at least two current sensing devices wherein each current sensing device measures current flowing through the low power semiconductor switch 130AL, 130BL, 130CL of each H-Bridge arm. The embodiment illustrated in Figure 6 depicts three current sensing 140A, 140B, 140C devices wherein each current sensing device measures current flowing through the lower power semiconductor switch 130AL, 130BL, 130CL of each H-bridge arm. In an alternate embodiment of the invention as illustrated in Figure 7, the plurality of current sensing devices 140 comprises at least two current sensing devices wherein each current sensing device is connected in series with stator phase windings. In an embodiment, the plurality of current sensing devices 140 comprises three current sensing devices 140A, 140B, 140C wherein each current sensing device is connected in series with three stator phase windings corresponding to an exemplary three phase rotary electric machine.

As illustrated in Figure 6, the system 100 further comprises of a current monitor 160 that is configured to measure one current sample per phase per Pulse Width Modulation cycle wherein the current sampling is performed substantially in the center of zero-sequence commutation, when the state of the rotary electric machine is the high-speed state. The current monitor 160 is further configured to measure two current samples per phase per Pulse Width Modulation cycle wherein the current sampling performed substantially equally apart from the center of the zero-sequence commutation, when the state of the rotary electric machine is the low speed state.

To accurately detect current variation or change within the Pulse Width Modulation cycle, the current sensing devices 140 are preferred to have sufficiently large analog measurement bandwidth, preferably in excess of 10 times of frequency of the PWM signal applied to stator phase windings.

In operation, the system 100 via the pulse width modulator 120 is configured to generate different frequency of PWM signals along for stator phase windings at different speeds of the rotor of the rotary electric machine and PWM duty values for different arms of the three-phase H bridge as illustrated in Figure 8. PWM duty value is defined by proportion of 1s to 0s received from the pulse width modulator. Lower frequency of PWM signals during the low speed state allows a more accurate measurement of current change or variation as low PWM frequency allows a provision for increasing time duration between the first and last current sample within the PWM cycle. Higher PWM frequency during the high speed state allows a greater number of current samples per unit motion of rotor, and a correspondingly greater update rate of PWM signals to stator phase windings, hence resulting in better control bandwidth.

Advantageously, the present invention provides a method and system for controlling a rotary electric machine whereby a sensor-less control of the rotary electric machine is provided, hence negating the requirement of sensors such as hall sensors in the motors. This allows for optimal mechanical packaging of the electric motor.

Further, the method of the present invention provides for sensor-less control of the rotary electric machine at all speeds of operation of the rotary electric machine, especially low speed without increasing unwanted harmonic current in stator phase windings.

While the present invention has been described with respect to certain embodiments, it will be apparent to those skilled in the art that various changes and modification may be made without departing from the scope of the invention as defined in the following claims.

## Claims

1. A method (200) for controlling a rotary electric machine, comprising the steps of:
determining a state of the rotary electric machine based on speed of a rotor of the rotary electric machine, the state comprising a high-speed state when the rotor speed is more than a predetermined threshold speed and a low-speed state when speed of the rotor is less than the predetermined threshold speed;
if the rotary electric machine is in the low-speed state:
calculating a mean current vector (Y) by measuring current in stator phase windings of the rotary electric machine within a Pulse Width Modulation Cycle by current sampling, with at least two current samples per phase per Pulse Width Modulation cycle, and for at least N-1 stator phase windings out of a total of N stator phase windings;
calculating an intra-PWM current ripple (ΔX) by reconstructing DC side current using the current samples of individual stator phase windings and determining a current variation quantity for the reconstructed DC side current;
computing an inductance vector based on the intra-PWM current ripple (ΔX); and
estimating a first rotor position (P1) and a first rotor speed (S1) based on the inductance vector and the mean current vector (Y); or
if the rotary electric machine is in the high speed state:
measuring current in stator phase windings of the rotary electric machine within a Pulse Width Modulation Cycle by current sampling, with at least one current sample per phase per Pulse Width Modulation Cycle, wherein the current sampling is performed for at least N-1 stator phase windings out of a total of N stator phase windings;
determining average current for each stator phase winding of the rotary electric machine within the Pulse Width Modulation cycle by averaging the respective current samples; and
estimating a second rotor position (P2) and second rotor speed (S2) based on the average currents in stator phase windings within the Pulse Width Modulation cycle;
selecting the state of the rotary electric machine between the high speed state and the low-speed state based on the estimated first rotor speed (S1) and/or the estimated second rotor speed (S2);
if the low-speed state is selected, updating Pulse Width Modulation signals based on the estimated first rotor position (P1); and
if the high-speed state is selected, updating Pulse Width Modulation signals based on the estimated second rotor position (P2).

2. The method (200) as claimed in claim 1 , further comprising the steps of:
initialising the state of the rotary electric machine as the low-speed state;
determining an initial position (Pi) of the rotor of the rotary electric machine with respect to a stator of the rotary electric machine by applying a set of commutations to stator phase windings and determining value of DC side current corresponding to each commutation, and initiating rotor position based on commutation resulting in maximum current;
applying Pulse Width Modulation signals to stator phase windings based on the initial position (Pᵢ) of the rotor; after which, the state of the rotary electric machine is determined as the low-speed state.

3. The method (200) as claimed in claim 1 or claim 2, further comprising the step of checking whether current sampling for stator phase windings corresponding to all N phases was performed, and wherein optionally the method further comprises the step of reconstructing multiple current samples for the Nth phase within the Pulse Width Modulation cycle, if the current sampling for stator phase windings corresponding to all N phases was not performed.

4. The method (200) as claimed in any preceding claim, further comprising the step of checking whether current sampling for stator phase windings corresponding to all N phases was performed, and wherein optionally the method further comprises the step of reconstructing multiple current samples for the Nth phase within the Pulse Width Modulation cycle, if the current sampling for stator phase windings corresponding to all N phases was not performed.

5. The method (200) as claimed in claim 1, further comprising the step of estimating average current flowing in the stator phase windings based on an assumed rotor position, DC bus voltage and on the PWM signals applied to the machine, and comparing the estimated average current to the determined average current, and wherein optionally the estimation of the second rotor position (P2) and the second rotor speed (S2) is corrected by an error metric based on difference between estimated average current and the determined average current.

6. A system (100) for controlling a rotary electric machine, comprising:
a pulse width modulator (120) for applying Pulse Width Modulation signals to stator phase windings of the rotary electric machine;
a plurality of semi-conductor power switches (130) for receiving Pulse Width Modulation signals and converting the signals into AC voltage for stator phase windings of the rotary electric machine;
a plurality of current sensing devices (140) for sensing the current in the stator phase windings corresponding to phases of the rotary electric machine; and
a control unit (150) configured to implement the method (200) of any preceding claim.

7. The system (100) as claimed in claim 6, wherein the control unit (150) is further configured for initialising the state of the rotary electric machine as the low-speed state, determining an initial position (Pi) of the rotor of the rotary electric machine with respect to a stator of the rotary electric machine by applying a set of commutations to stator phase windings and determining value of DC side current corresponding to each commutation and initiating rotor position based on commutation resulting in maximum current, applying Pulse Width Modulation signals to stator phase windings based on the initial position (Pi) of the rotor; after which, the state of the rotary electric machine is set as the low- speed state.

8. The system (100) as claimed in claim 6, wherein the plurality of power switches (130) comprise a three-phase H-bridge having six semi- conductor power switches (130AH, 130BH, 130CH, 130AL, 130BL, 130 CL) arranged in three H-bridge arms, such that each arm has a high power semiconductor switch and a low power semiconductor switch.

9. The system (100) as claimed in claim 8, configured to use space-vector-modulation technique for generating pulse-width-modulated signals based on center-aligned PWM.

10. The system (100) as claimed in claim 9, wherein a current monitor (160) is configured to: during the high speed state, measure one current sample per phase per Pulse Width Modulation cycle, the current sampling performed substantially in the center of zero- sequence commutation; and during low speed state, measure two current samples per phase per Pulse Width Modulation cycle, the current sampling performed substantially equally apart from the center of the zero-sequence commutation.

11. The system (100) as claimed in claim 8, comprising at least two current sensing devices (140), and wherein:
(i) each current sensing device measures current flowing through the low power semiconductor switch (130AL, 130BL, 130CL) of each H-Bridge arm; or
(ii) each current sensing device is connected in series with stator phase windings.

12. The system (100) as claimed in claim 10, wherein the current monitor (160) has analog measurement bandwidth substantially more than 10 times the frequency of PWM signal applied to the stator phase windings.

13. The system (100) as claimed in claim 6, configured to vary frequency of the pulse width modulator (120) depending on variables comprising the estimated first rotor speed (S1) and the estimated second rotor speed (S2).

## Patentansprüche

1. Verfahren (200) zum Steuern einer elektrischen Drehmaschine, umfassend die folgenden Schritte:
Bestimmen eines Zustands der elektrischen Drehmaschine basierend auf einer Geschwindigkeit eines Rotors der elektrischen Drehmaschine, wobei der Zustand einen Hochgeschwindigkeitszustand, wenn die Rotorgeschwindigkeit mehr als eine vorbestimmte Schwellenwertgeschwindigkeit ist, und einen Niedergeschwindigkeitszustand, wenn die Geschwindigkeit des Rotors weniger als die vorbestimmte Schwellenwertgeschwindigkeit ist, umfasst;
falls sich die elektrische Drehmaschine in dem Niedergeschwindigkeitszustand befindet:
Berechnen eines mittleren Stromvektors (Y) durch Messen eines Stromes in Statorphasenwicklungen der elektrischen Drehmaschine innerhalb eines Pulsbreitenmodulationszyklus durch Stromabtasten mit mindestens zwei Stromabtastungen pro Phase pro Pulsbreitenmodulationszyklus und für mindestens N-1 Statorphasenwicklungen aus insgesamt N Statorphasenwicklungen;
Berechnen einer Intra-PWM-Stromrestwelligkeit (ΔX) durch Rekonstruieren eines DC-Seitenstroms unter Verwendung der Stromabtastungen einzelner Statorphasenwicklungen und Bestimmen einer Stromvariationsquantität für den rekonstruierten DC-Seitenstrom;
Berechnen eines Induktivitätsvektors basierend auf der Intra-PWM-Stromrestwelligkeit (ΔX); und
Schätzen einer ersten Rotorposition (P1) und einer ersten Rotorgeschwindigkeit (S1) basierend auf dem Induktivitätsvektor und dem mittleren Stromvektor (Y); oder
falls sich die elektrische Drehmaschine in dem Hochgeschwindigkeitszustand befindet:
Messen eines Stromes in Statorphasenwicklungen der elektrischen Drehmaschine innerhalb eines Pulsbreitenmodulationszyklus durch Stromabtasten mit mindestens einer Stromabtastung pro Phase pro Pulsbreitenmodulationszyklus, wobei das Stromabtasten für mindestens N-1 Statorphasenwicklungen aus insgesamt N Statorphasenwicklungen durchgeführt wird;
Bestimmen eines durchschnittlichen Stromes für jede Statorphasenwicklung der elektrischen Drehmaschine innerhalb des Pulsbreitenmodulationszyklus durch Mitteln der jeweiligen Stromabtastungen; und
Schätzen einer zweiten Rotorposition (P2) und einer zweiten Rotorgeschwindigkeit (S2) basierend auf den durchschnittlichen Strömen in Statorphasenwicklungen innerhalb des Pulsbreitenmodulationszyklus;
Auswählen des Zustands der elektrischen Drehmaschine zwischen dem Hochgeschwindigkeitszustand und dem Niedergeschwindigkeitszustand basierend auf der geschätzten ersten Rotorgeschwindigkeit (S1) und/oder der geschätzten zweiten Rotorgeschwindigkeit (S2);
falls der Niedergeschwindigkeitszustand ausgewählt wird, Aktualisieren von Pulsbreitenmodulationssignalen basierend auf der geschätzten ersten Rotorposition (P1); und
falls der Hochgeschwindigkeitszustand ausgewählt wird, Aktualisieren von Pulsbreitenmodulationssignalen basierend auf der geschätzten zweiten Rotorposition (P2).

2. Verfahren (200) nach Anspruch 1, ferner umfassend die folgenden Schritte:
Initialisieren des Zustands der elektrischen Drehmaschine als den Niedergeschwindigkeitszustand;
Bestimmen einer initialen Position (Pi) des Rotors der elektrischen Drehmaschine in Bezug auf einen Stator der elektrischen Drehmaschine durch Anwenden eines Satzes von Kommutierungen auf Statorphasenwicklungen und Bestimmen eines Wertes des DC-Seitenstroms, der jeder Kommutierung entspricht, und Initiieren einer Rotorposition basierend auf einer Kommutierung, die zu einem maximalen Strom führt;
Anwenden von Pulsbreitenmodulationssignalen auf Statorphasenwicklungen basierend auf der initialen Position (Pᵢ) des Rotors; wonach der Zustand der elektrischen Drehmaschine als der Niedergeschwindigkeitszustand bestimmt wird.

3. Verfahren (200) nach Anspruch 1 oder Anspruch 2, ferner umfassend den Schritt zum Überprüfen, ob eine Stromabtastung für Statorphasenwicklungen, die allen N Phasen entsprechen, durchgeführt wurde, und wobei das Verfahren gegebenenfalls ferner den Schritt zum Rekonstruieren mehrerer Stromabtastungen für die N-te Phase innerhalb des Pulsbreitenmodulationszyklus umfasst, falls die Stromabtastung für Statorphasenwicklungen, die allen N Phasen entsprechen, nicht durchgeführt wurde.

4. Verfahren (200) nach einem der vorhergehenden Ansprüche, ferner umfassend den Schritt des Überprüfens, ob eine Stromabtastung für Statorphasenwicklungen, die allen N Phasen entsprechen, durchgeführt wurde, und wobei das Verfahren gegebenenfalls ferner den Schritt des Rekonstruierens mehrerer Stromabtastungen für die N-te Phase innerhalb des Pulsbreitenmodulationszyklus umfasst, falls die Stromabtastung für Statorphasenwicklungen, die allen N Phasen entsprechen, nicht durchgeführt wurde.

5. Verfahren (200) nach Anspruch 1, ferner umfassend den Schritt zum Schätzen eines durchschnittlichen Stromes, der in den Statorphasenwicklungen fließt, basierend auf einer angenommenen Rotorposition, einer DC-Busspannung und auf den PWM-Signalen, die auf die Maschine angewandt werden, und Vergleichen des geschätzten durchschnittlichen Stromes mit dem bestimmten durchschnittlichen Strom, und wobei die Schätzung der zweiten Rotorposition (P2) und der zweiten Rotorgeschwindigkeit (S2) gegebenenfalls durch eine Fehlermetrik basierend auf einer Differenz zwischen dem geschätzten durchschnittlichen Strom und dem bestimmten durchschnittlichen Strom korrigiert wird.

6. System (100) zum Steuern einer elektrischen Drehmaschine, umfassend:
einen Pulsbreitenmodulator (120) zum Anwenden von Pulsbreitenmodulationssignalen auf Statorphasenwicklungen der elektrischen Drehmaschine;
eine Vielzahl von Halbleiterleistungsschaltern (130) zum Empfangen von Pulsbreitenmodulationssignalen und Umwandeln der Signale in eine AC-Spannung für Statorphasenwicklungen der elektrischen Drehmaschine;
eine Vielzahl von Stromerfassungsvorrichtungen (140) zum Erfassen des Stromes in den Statorphasenwicklungen, die Phasen der elektrischen Drehmaschine entsprechen; und
eine Steuereinheit (150), die dazu konfiguriert ist, das Verfahren (200) nach einem der vorhergehenden Ansprüche umzusetzen.

7. System (100) nach Anspruch 6, wobei die Steuereinheit (150) ferner zum Initialisieren des Zustands der elektrischen Drehmaschine als den Niedergeschwindigkeitszustand, Bestimmen einer initialen Position (Pi) des Rotors der elektrischen Drehmaschine in Bezug auf einen Stator der elektrischen Drehmaschine durch Anwenden eines Satzes von Kommutierungen auf Statorphasenwicklungen und Bestimmen eines Wertes eines DC-Seitenstroms, der jeder Kommutierung entspricht, und Initiieren einer Rotorposition basierend auf einer Kommutierung, die zu einem maximalen Strom führt, Anwenden von Pulsbreitenmodulationssignalen auf Statorphasenwicklungen basierend auf der initialen Position (Pi) des Rotors konfiguriert ist; wonach der Zustand der elektrischen Drehmaschine als der Niedergeschwindigkeitszustand eingestellt wird.

8. System (100) nach Anspruch 6, wobei die Vielzahl von Leistungsschaltern (130) eine dreiphasige H-Brücke umfasst, die sechs Halbleiterleistungsschalter (130AH, 130BH, 130CH, 130AL, 130BL, 130CL), die in drei H-Brückenarmen angeordnet sind, derart aufweist, dass jeder Arm einen Hochleistungshalbleiterschalter und einen Niederleistungshalbleiterschalter aufweist.

9. System (100) nach Anspruch 8, das dazu konfiguriert ist, eine Raumvektormodulationstechnik zum Erzeugen pulsbreitenmodulierter Signale basierend auf einer zentral ausgerichteten PWM zu verwenden.

10. System (100) nach Anspruch 9, wobei ein Strommonitor (160) zu Folgendem konfiguriert ist: während des Hochgeschwindigkeitszustands, Messen einer Stromabtastung pro Phase pro Pulsbreitenmodulationszyklus, wobei die Stromabtastung im Wesentlichen in dem Zentrum einer Nullkommutierung durchgeführt wird; und während des Niedergeschwindigkeitszustands, Messen zweier Stromabtastungen pro Phase pro Pulsbreitenmodulationszyklus, wobei die Stromabtastung im Wesentlichen gleichmäßig von dem Zentrum der Nullkommutierung entfernt durchgeführt wird.

11. System (100) nach Anspruch 8, umfassend mindestens zwei Stromerfassungsvorrichtungen (140), und wobei:
(i) jede Stromerfassungsvorrichtung einen Strom misst, der durch den Niederleistungshalbleiterschalter (130AL, 130BL, 130CL) jedes H-Brückenarms fließt; oder
(ii) jede Stromerfassungsvorrichtung in Reihe mit Statorphasenwicklungen geschaltet ist.

12. System (100) nach Anspruch 10, wobei der Strommonitor (160) eine analoge Messbandbreite aufweist, die im Wesentlichen mehr als das 10-Fache der Frequenz des PWM-Signals beträgt, das auf die Statorphasenwicklungen angewandt wird.

13. System (100) nach Anspruch 6, das dazu konfiguriert ist, eine Frequenz des Pulsbreitenmodulators (120) in Abhängigkeit von Variablen, umfassend die geschätzte erste Rotorgeschwindigkeit (S1) und die geschätzte zweite Rotorgeschwindigkeit (S2), zu variieren.

## Revendications

1. Procédé (200) de commande d'une machine électrique rotative, comprenant les étapes consistant à :
déterminer un état de la machine électrique rotative sur la base d'une vitesse d'un rotor de la machine électrique rotative, l'état comprenant un état à haute vitesse lorsque la vitesse de rotor est supérieure à une vitesse de seuil prédéterminée et un état à basse vitesse lorsque la vitesse du rotor est inférieure à la vitesse de seuil prédéterminée ;
si la machine électrique rotative est dans l'état à basse vitesse :
calculer un vecteur de courant moyen (Y) en mesurant le courant dans des enroulements de phase statorique de la machine électrique rotative au sein d'un cycle de modulation de largeur d'impulsion par échantillonnage de courant, avec au moins deux échantillons de courant par phase et par cycle de modulation de largeur d'impulsion, et pour au moins N-1 enroulements de phase statorique sur un total de N enroulements de phase statorique ;
calculer une ondulation de courant intra-PWM (ΔX) en reconstruisant un courant côté continu à l'aide des échantillons de courant d'enroulements de phase statorique individuels et en déterminant une quantité de variation de courant pour le courant côté continu reconstruit ;
calculer un vecteur d'inductance sur la base de l'ondulation de courant intra-PWM (ΔX) ; et
estimer une première position de rotor (P1) et une première vitesse de rotor (S1) sur la base du vecteur d'inductance et du vecteur de courant moyen (Y) ; ou
si la machine électrique rotative est dans l'état à haute vitesse :
mesurer un courant dans des enroulements de phase statorique de la machine électrique rotative au sein d'un cycle de modulation de largeur d'impulsion par échantillonnage de courant, avec au moins un échantillon de courant par phase et par cycle de modulation de largeur d'impulsion, dans lequel l'échantillonnage de courant est effectué pour au moins N-1 enroulements de phase statorique sur un total de N enroulements de phase statorique ;
déterminer un courant moyen pour chaque enroulement de phase statorique de la machine électrique rotative au sein du cycle de modulation de largeur d'impulsion en moyennant les échantillons de courant respectifs ; et
estimer une seconde position de rotor (P2) et une seconde vitesse de rotor (S2) sur la base des courants moyens dans des enroulements de phase statorique au sein du cycle de modulation de largeur d'impulsion ;
sélectionner l'état de la machine électrique rotative parmi l'état à haute vitesse et l'état à basse vitesse sur la base de la première vitesse de rotor (S1) estimée et/ou de la seconde vitesse de rotor (S2) estimée ;
si l'état à basse vitesse est sélectionné, mettre à jour des signaux de modulation de largeur d'impulsion sur la base de la première position de rotor (P1) estimée ; et
si l'état à haute vitesse est sélectionné, mettre à jour des signaux de modulation de largeur d'impulsion sur la base de la seconde position de rotor (P2) estimée.

2. Procédé (200) selon la revendication 1, comprenant en outre les étapes consistant à :
initialiser l'état de la machine électrique rotative en tant qu'état à basse vitesse ;
déterminer une position initiale (Pi) du rotor de la machine électrique rotative par rapport à un stator de la machine électrique rotative en appliquant un ensemble de commutations à des enroulements de phase statorique et en déterminant une valeur de courant côté continu correspondant à chaque commutation, et initialiser la position du rotor sur la base d'une commutation entraînant un courant maximal ;
appliquer des signaux de modulation de largeur d'impulsion à des enroulements de phase statorique sur la base de la position initiale (Pᵢ) du rotor ; après quoi, l'état de la machine électrique rotative est déterminé comme étant l'état à basse vitesse.

3. Procédé (200) selon la revendication 1 ou la revendication 2, comprenant en outre l'étape consistant à vérifier si l'échantillonnage de courant pour des enroulements de phase statorique correspondant à la totalité des N phases a été effectué, et dans lequel, éventuellement, le procédé comprend en outre l'étape consistant à reconstruire de multiples échantillons de courant pour la Nième phase au sein du cycle de modulation de largeur d'impulsion, si l'échantillonnage de courant pour des enroulements de phase statorique correspondant à la totalité des N phases n'a pas été effectué.

4. Procédé (200) selon l'une quelconque des revendications précédentes, comprenant en outre l'étape consistant à vérifier si l'échantillonnage de courant pour des enroulements de phase statorique correspondant à la totalité des N phases a été effectué, et dans lequel, éventuellement, le procédé comprend en outre l'étape consistant à reconstruire de multiples échantillons de courant pour la Nième phase au sein du cycle de modulation de largeur d'impulsion, si l'échantillonnage de courant pour des enroulements de phase statorique correspondant à la totalité des N phases n'a pas été effectué.

5. Procédé (200) selon la revendication 1, comprenant en outre l'étape consistant à estimer un courant moyen circulant dans les enroulements de phase statorique sur la base d'une position de rotor supposée, d'une tension de bus continu et des signaux PWM appliqués à la machine, et à comparer le courant moyen estimé au courant moyen déterminé, et dans lequel, éventuellement, l'estimation de la seconde position de rotor (P2) et de la seconde vitesse de rotor (S2) est corrigée par une métrique d'erreur basée sur une différence entre le courant moyen estimé et le courant moyen déterminé.

6. Système (100) de commande d'une machine électrique rotative, comprenant :
un modulateur de largeur d'impulsion (120) pour appliquer des signaux de modulation de largeur d'impulsion à des enroulements de phase statorique de la machine électrique rotative ;
une pluralité de commutateurs de puissance à semi-conducteur (130) pour recevoir des signaux de modulation de largeur d'impulsion et convertir les signaux en une tension alternative pour des enroulements de phase statorique de la machine électrique rotative ;
une pluralité de dispositifs de détection de courant (140) pour détecter le courant dans les enroulements de phase statorique correspondant à des phases de la machine électrique rotative ; et
une unité de commande (150) configurée pour mettre en œuvre le procédé (200) selon l'une quelconque des revendications précédentes.

7. Système (100) selon la revendication 6, dans lequel l'unité de commande (150) est en outre configurée pour initialiser l'état de la machine électrique rotative en tant qu'état à basse vitesse, déterminer une position initiale (Pi) du rotor de la machine électrique rotative par rapport à un stator de la machine électrique rotative en appliquant un ensemble de commutations à des enroulements de phase statorique et en déterminant une valeur de courant côté continu correspondant à chaque commutation et en initialisant une position de rotor sur la base d'une commutation entraînant un courant maximal, appliquer des signaux de modulation de largeur d'impulsion à des enroulements de phase statorique sur la base de la position initiale (Pi) du rotor ; après quoi, l'état de la machine électrique rotative est défini comme étant l'état à basse vitesse.

8. Système (100) selon la revendication 6, dans lequel la pluralité de commutateurs de puissance (130) comprend un pont en H triphasé ayant six commutateurs de puissance à semi-conducteur (130AH, 130BH, 130CH, 130AL, 130BL, 130CL) agencés dans trois bras de pont en H, de sorte que chaque bras possède un commutateur à semi-conducteur haute puissance et un commutateur à semi-conducteur basse puissance.

9. Système (100) selon la revendication 8, configuré pour utiliser une technique de modulation vectorielle spatiale pour générer des signaux modulés en largeur d'impulsion sur la base d'une PWM à alignement central.

10. Système (100) selon la revendication 9, dans lequel un moniteur de courant (160) est configuré pour : pendant l'état à haute vitesse, mesurer un échantillon de courant par phase et par cycle de modulation de largeur d'impulsion, l'échantillonnage de courant étant effectué sensiblement au centre d'une commutation homopolaire ; et pendant l'état à basse vitesse, mesurer deux échantillons de courant par phase et par cycle de modulation de largeur d'impulsion, l'échantillonnage de courant étant effectué à des distances sensiblement égales du centre de la commutation homopolaire.

11. Système (100) selon la revendication 8, comprenant au moins deux dispositifs de détection de courant (140), et dans lequel :
(i) chaque dispositif de détection de courant mesure un courant circulant à travers le commutateur à semi-conducteur basse puissance (130AL, 130BL, 130CL) de chaque bras de pont en H ; ou
(ii) chaque dispositif de détection de courant est connecté en série avec des enroulements de phase statorique.

12. Système (100) selon la revendication 10, dans lequel le moniteur de courant (160) présente une bande passante de mesure analogique sensiblement supérieure à 10 fois la fréquence d'un signal PWM appliqué aux enroulements de phase statorique.

13. Système (100) selon la revendication 6, configuré pour faire varier une fréquence du modulateur de largeur d'impulsion (120) en fonction de variables comprenant la première vitesse de rotor (S1) estimée et la seconde vitesse de rotor (S2) estimée.
